# EUROPÄISCHE PATENTSCHRIFT

(11) **EP 0 527 150 B1**
(45) Veröffentlichungstag und Bekanntmachung des Hinweises auf die Patenterteilung: **20.07.1994**
(21) Anmeldenummer: 91907893.1
(22) Anmeldetag: 24.04.1991
(51) Int. Cl.: G01B 11/06

(54) **ELLIPSOMETER**
ELLIPSOMETER
ELLIPSOMETRE

(30) Priorität: 25.04.1990 DE 4013211
(43) Veröffentlichungstag der Anmeldung: 17.02.1993
(73) Patentinhaber: FRAUNHOFER-GESELLSCHAFT ZUR FÖRDERUNG DER ANGEWANDTEN FORSCHUNG E.V., 80636 München (DE)
(72) Erfinder: BERGER, Rudolf, D-8525 Marloffstein (DE); RYSSEL, Heiner, D-8521 Spordorf (DE); SCHNEIDER, Claus, D-8521 Möhrendorf (DE); ADERHOLD, Wolfgang, D-8500 Nürnberg (DE)
(74) Vertreter: Schoppe, Fritz, Dipl.-Ing.
(86) Internationale Anmeldenummer: DE9100345
(87) Internationale Veröffentlichungsnummer: WO9116600

(56) Entgegenhaltungen:
- EP-A- 0 296 680
- DE-A- 2 417 548
- US-A- 3 060 793

## Beschreibung

Die vorliegende Erfindung betrifft ein Ellipsometer zur in-situ-Schichtdickenmessung nach dem Oberbegriff des Patentanspruchs 1.

Insbesondere befaßt sich die vorliegende Erfindung mit einem Ellipsometer, das in das in der Siliziumhalbleitertechnologie einsetzbar ist, um innerhalb von konventionellen Oxidationsöfen, CVD-Öfen oder CVD-Reaktoren die aufgewachsene Oxidations- oder CVD-Schichtdicke auf Siliziumscheiben in situ zu kontrollieren.

Ellipsometer zur Schichtdickenmessung sind sowohl bezüglich ihres Meßprinzipes wie auch bezüglich ihrer Struktur bereits seit Jahrzehnten bekannt, wie dies durch folgende Fachveröffentlichungen belegt ist:

Y.J.van der Meulen, N.C.Hien, "Design and operation of an automated, high temperature ellipsometer", J.Opt.Soc.Am. 64, 1974.

R.H.Muller, "Principles of Ellipsometry", Advances in Electrochemistry and Electrochemical Engineering, vol.9, Wiley, New York 1973.

Ebenfalls ist es bekannt, Ellipsometer zur Messung der aufgewachsenen Oxidschichtdicke auf Siliziumscheiben in Oxidationsöfen einzusetzen, wie sich dies aus der erstgenannten Fachveröffentlichung ergibt. Üblicherweise wird hier die Geometrie des Oxidationsofens der Struktur des Ellipsometers angepasst. Hierbei wird die Heizkassette des Oxidationsofens mit Strahldurchführungen versehen, wodurch Störungen innerhalb des Temperaturprofiles im Oxidationsofen auftreten können. Ferner wird eine Röhrenverbindung zum Quarzrohr des Oxidationsofens mit Strahldurchtrittsfenstern benötigt, wodurch es zu Spannungen im Quarzrohr kommt. Diese Röhrenverbindung kann nicht gasdicht hergestellt werden, so daß ein Eindringen von Außenluft aus der Heizkassette in das Prozeßrohr möglich ist. Ferner ist es bei dem bekannten Ellipsometer erforderlich, daß dieses bei hoher Temperatur auf die zu vermessende Schichtdicke der Siliziumscheibe justiert wird, ohne daß der Strahlengang für die Bedienungsperson einsehbar ist. Aus der Gesamtstruktur des Ellipsometers und des Oxidationsofens ergibt sich, daß mittels des bekannten Ellipsometers nur an einem einzigen Ort auf der Halbleiterscheibe eine Schichtdickenmessung vorgenommen werden kann. Ferner erweist es sich für die Praxis als untragbar, daß bei dem bekannten Ellipsometer die Polarisatoreinheit und die Analysatoreinheit an gegenüberliegenden Seiten der Heizkassette des Oxidationsofens im sogenannten Grauraum liegen.

Ein Ellipsometer zur in-situ-Schichtdickenmessung von auf Halbleiterscheiben aufgebrachten oder abgeschiedenen Schichten innerhalb eines Ofens ist aus der EP-B1-102470 bekannt. Bei diesem bekannten Ellipsometersystem sind die Analysatoreinheit und die Polarisatoreinheit derart angeordnet, daß der von der Polarisatoreinheit ausgesendete Lichtstrahl parallel zu dem von der Analysatoreinheit empfangenen Lichtstrahl ist, wobei diese Lichtstrahlen parallel zur Symmetrieachse des Quarzrohres des Oxidationsofens verlaufen. Der von der Polarisatoreinheit ausgesendete Lichtstrahl wird an der Oberfläche einer ersten Siliziumscheibe, die etwa im 45° Winkel zur Quarzrohrlängsachse angeordnet ist, abgelenkt, und trifft auf eine symmetrisch zu der ersten Siliziumscheibe angeordnete zweite Siliziumscheibe, durch die der Lichtstrahl zur Analysatoreinheit reflektiert wird. Somit ist dieses Ellipsometersystem nur zum gleichzeitigen Messen von auf zwei Siliziumscheiben abgeschiedenen Oxidationsschichten verwendbar. Ferner hat sich herausgestellt, daß bei einem derartigen Ellipsometersystem ein zeitlich stark schwankendes Meßsignal erzeugt wird, so daß diese Anordnung aus Gründen der Meßgenauigkeit keine weitere Verbreitung gefunden hat. Ebenfalls ist es bei dieser Ellipsometeranordnung erforderlich, nach Beladen des Oxidationsofens mit einem Satz von Siliziumscheiben eine Justierung der Polarisatoreinheit und der Analysatoreinheit vorzunehmen.

Die DE-A-24 17 548 zeigt ein gattungsgemäßes Ellipsometer zur Schichtdickenmessung von innerhalb eines Ofens auf ein Objekt aufgebrachten oder abgeschiedenen Schichten, mit einer Analysatoreinheit, einer Strahlumlenkvorrichtung und einer Polarisatoreinheit, wobei die Strahlumlenkvorrichtung ein im Strahlengang vor dem Objekt angeordnetes erstes Prisma und ein im Strahlengang hinter dem Objekt angeordnetes zweites Prisma aufweist. Dieses bekannte Ellipsometer ist nur unter Laborbedingungen einsetzbar und nicht in-situ-tauglich, da sich bei Temperaturänderungen die Phasenverschiebung in den Prismen ändert. Einzelheiten der Ausführung dieses Ellipsometers sind dieser Schrift nicht zu entnehmen.

Gegenüber dem oben gewürdigten Stand der Technik liegt der vorliegenden Erfindung die Aufgabe zugrunde, ein Ellipsometer der eingangs genannten Art so weiterzubilden, daß mit diesem bei einfacher Handhabung ein zeitlich stabiles Meßsignal erzielt wird, das auch bei hohen Temperaturen ein niedriges Meßwertrauschen zeigt und eine hohe Meßkonstanz in der Schichtdickenbestimmung während voneinander unabhängiger, getrennter Prozeßläufe ermöglicht.

Diese Aufgabe wird durch ein Ellipsometer gemäß Patentanspruch 1 gelöst.

Der Erfindung liegt die Erkenntnis zugrunde, daß reproduzierbare Meßergebnisse für unterschiedliche Prozeßläufe sowie das Vermeiden eines jeglichen Kontaminierens der Meßobjekte nur dann erzielbar sind, wenn von der eingangs beschriebenen Ellipsometeranordnung abgewichen wird, bei der Röhrenverbindungen zum Quarzrohr des Oxidationsofens erforderlich sind. Die Erfindung sieht diesbezüglich vor, daß die Polarisatoreinheit, die Analysatoreinheit, das Objekt und die Strahlumlenkvorrichtung gegenüber dem Paddle festgelegt sind. Ferner liegt der Erfindung die Erkenntnis zugrunde, daß Ellipsometermeßsysteme derjenigen Art, wie sie in dem zuletzt erörterten Stand der Technik offenbart sind, schon deswegen eine niedrige Meßgenauigkeit haben, weil bei diesen sowohl der von der Polarisatoreinheit ausgesandte Strahl wie auch der von der Analysatoreinheit empfangene Strahl im Bereich einer Ofenverschlußplatte stark strömende Bereiche des Prozeßgases durchlaufen, welche zu einem zeitlich schwankenden oder zitternden Meßergebnis bei der Meßanordnung nach dem Stand der Technik führen. Diese Probleme können bei dem erfindungsgemäßen Ellipsometer aufgrund der Rohre, durch die die genannten Lichtstrahlen geführt werden, nicht auftreten. Daher weist das erfindungsgemäße Ellipsometer trotz einer Strahlführung über lange Strecken mit hohen Temperaturgradienten eine hohe zeitliche Meßkonstanz auf. Ferner wird dadurch, daß die Stahlumlenkung bei dem erfindungsgemäßen Ellipsometer durch zwei Prismen erfolgt, die gleichfalls gegenüber dem Paddle festgelegt sind, eine einfache Gesamtstruktur bei hoher Reproduzierbarkeit der Meßergebnisse von Prozeßlauf zu Prozeßlauf gewährleistet.

Bevorzugte Weiterbildungen des erfindungsgemäßen Ellipsometers sind in den abhängigen Ansprüchen angegeben.

Nachfolgend wird unter Bezugnahme auf die beiliegenden Zeichnungen ein bevorzugtes Ausführungsbeispiel des erfindungsgemäßen Ellipsometers näher erläutert. Es zeigen:
- Fig. 1: eine schematische Draufsichtdarstellung einer Ausführungsform des erfindungsgemäßen Ellipsometers;
- Fig. 2: eine Schnittdarstellung durch einen Teil der Ausführungsform des Ellipsometers gem. Fig. 1;
- Fig. 3: eine schematische Darstellung zur Erläuterung der Meßortverstellung bei dieser Ausführungsform des erfindungsgemäßen Ellipsometers;
- Fig. 4: eine Draufsicht auf die Anordnung eines Prisma bei der Ausführungsform des erfindungsgemäßen Ellipsometers;
- Fig. 5: eine Seitenansicht der Anordnung des Prisma gemäß Fig. 4;
- Fig. 6: eine Detaildarstellung der Gesamtanordnung des erfindungsgemäßen Ellipsometers;
- Fig. 7: eine Seitenansicht der Ausführungsform des erfindungsgemäßen Ellipsometers.

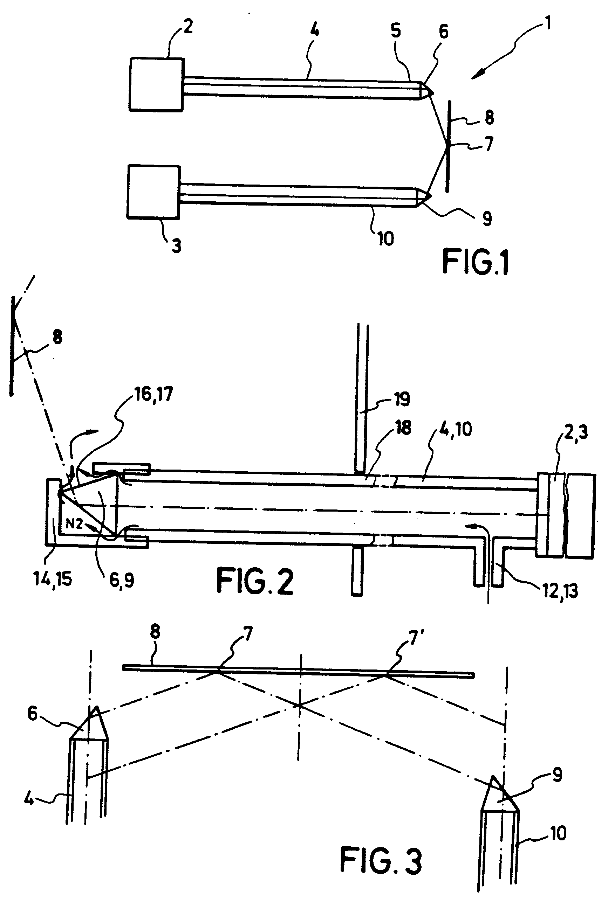

Wie in Fig. 1 gezeigt ist, umfaßt das Ellipsometer, das in seiner Gesamtheit mit dem Bezugszeichen 1 bezeichnet ist, eine Polarisatoreinheit 2, die einen polarisierten Lichtstrahl aussendet, sowie eine Analysatoreinheit 3.

Der von der Polarisatoreinheit 2 ausgesendete polarisierte Lichtstrahl durchläuft ein erstes Rohr 4, an dessen der Polarisatoreinheit 2 abgewandten Ende 5 ein erstes Prisma 6 befestigt ist, durch das der Lichtstrahl auf einen Meßort 7 auf einer Siliziumscheibe 8 fällt. Am Meßort 7, bei dem es sich beispielsweise um einen bezüglich seiner Schichtdicke zu vermessenden Oxidschichtbereich der Siliziumscheibe 8 handeln kann, wird das polarisierte Licht reflektiert und fällt auf ein zweites Prisma 9, das an einem zweiten Rohr 10 festgelegt ist. Nach Umlenkung des Lichtstrahls durch das zweite Prisma 9 und Durchlaufen des zweiten Rohres 10 wird das Licht von der Analysatoreinheit 3 empfangen.

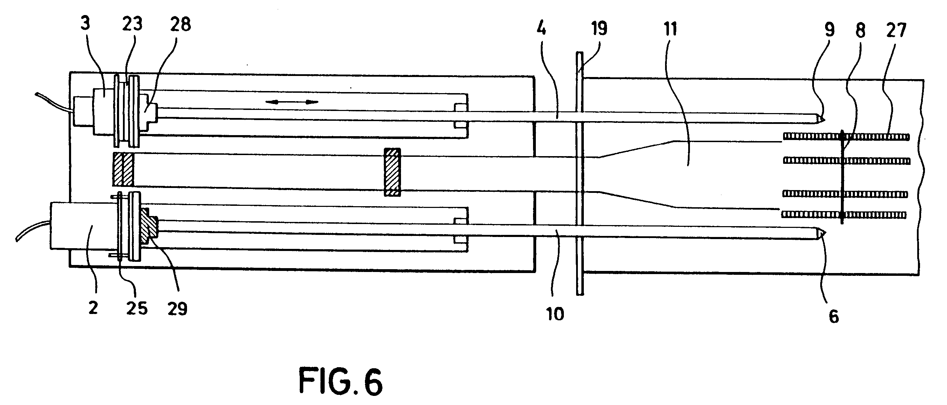

Wie später unter Bezugnahme auf Fig. 6 noch näher erläutert wird, sind die Polarisatoreinheit 2 und die Analysatoreinheit 3 ebenso an dem Paddle 11 (Fig. 6) festgelegt wie die Siliziumscheibe 8. Die Rohre 4, 10 sind ihrerseits an der Polarisatoreinheit 2 bzw. an der Analysatoreinheit 3 befestigt, so daß auch die Prismen 6, 9 über die Rohre 4, 10 bzw. die Polarisatoreinheit 2 oder die Analysatoreinheit 3 gegenüber dem Paddle 11 festgelegt sind.

Die Rohre 4, 10 sind als Quarzglasrohre ausgeführt, deren Innenwände durch Sandstrahlen aufgerauht sind. Durch diese Ausgestaltung der Rohre kann eine eventuelle Fehlausrichtung der Rohre 4, 10 leicht erkannt werden, da ein Auftreffen des Lichtstrahles an der aufgerauhten Innenwand von der Bedienungsperson als Lichtfleck erkennbar wäre.

Wie in Fig. 2 gezeigt ist, weist jedes der Rohre 4, 10 an seinem der Polarisatoreinheit 2 oder der Analysatoreinheit 3 zugewandten Ende einen Gaszufuhrstutzen 12, 13 auf, durch den Stickstoff zu den Rohren 4, 10 zugeführt wird. Im Bereich der Prismen 6, 9 schließen an die Rohre 4, 10 Gasführungsvorrichtungen 14, 15 an, die den aus den Rohrenden im Bereich der Prismen 6, 9 ausströmenden Stickstoff derart führen, daß dieser einen Stickstoffvorhang vor der der Siliziumscheibe 8 zugewandten Prismenfläche 16, 17 der Prismen 6, 9 bildet. Ein derartiger Stickstoffvorhang verhindert eine Verschmutzung dieser Prismenflächen 16, 17 bei Einsatz des Ellipsometers in Verbindung mit chemischen Dampfabscheidungsprozessen.

Wie ferner der Fig. 2 zu entnehmen ist, erstrecken sich die Rohre 4, 10 jeweils von der Polarisatoreinheit 2 bzw. der Analysatoreinheit 3 durch Ausschnitte 18 in der Verschlußplatte 19 in das Innere des (nicht dargestellten) Ofens.

Wie später unter Bezugnahme auf Fig. 6 näher erläutert werden wird, sind die Polarisatoreinheit und die Analysatoreinheit in Richtung der Längsachse der Rohre 4, 10 gegenüber dem Paddle 11 (Fig. 6) verschiebbar angeordnet.

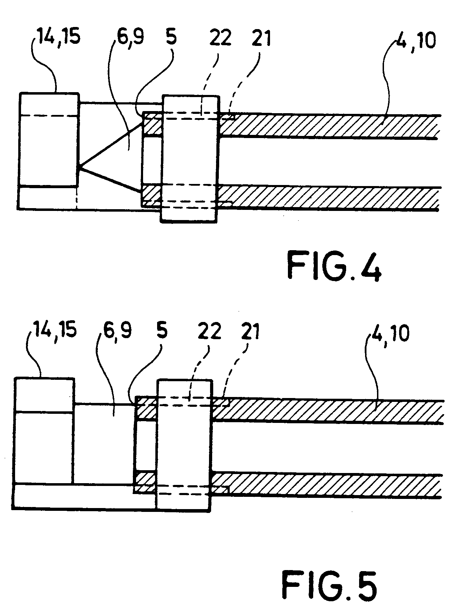

Durch die Längsverschiebbarkeit der Polarisatoreinheit 2 zusammen mit dem ersten Rohr 4 und dem ersten Prisma 6 bzw. der Analysatoreinheit 3 zusammen mit dem zweiten Rohr 10 und dem zweiten Prisma 9 kann der Meßort 7, 7′ gegenüber der Siliziumscheibe 8 in Querrichtung zur Längsachse der Rohre 4, 10 variiert werden, wie dies für zwei verschiedene Längseinstellungen der Fig. 3 zu entnehmen ist.

Wie dies insbesondere in den Fig. 4 und 5 zu erkennen ist, weisen die Rohre 4, 10 an ihrem prismenseitigen Ende ein Quarzaußengewinde 21 auf, mit dem ein entsprechendes Gegengewinde 22 der Gasführungsvorrichtung 14, 15 Eingriff nimmt. Das dem Prisma 6, 9 zugewandte Vorderende 5 der Rohre 4, 10 ist plangedreht und dient als Anlagefläche für das Prisma 6, 9.

Wie in Fig. 6 gezeigt ist, ist die Analysatoreinheit 3 über einen ersten Kreuztisch 23 mit einer Grundplatte verbunden, an der die Polarisatoreinheit 2 über einen Taumeltisch 25 angebracht ist. Die Grundplatte ist ihrerseits mit dem Paddle 11 verbunden, das beispielsweise ein SiC-Paddle sein kann. Auf dem Paddle 11 ist ein Boot 27 zur Aufnahme von Siliziumscheiben 8 angebracht. Wie bereits erläutert, erstrekken sich die Rohre 4, 10 jeweils von der Analysatoreinheit 3 bzw. der Polarisatoreinheit 2 bis zu den Prismen 6, 9.

Die Rohre 4, 10 sind mittels einer ersten bzw. zweiten Drehlagervorrichtung 28, 29 um ihre Längsachse drehbar gelagert.

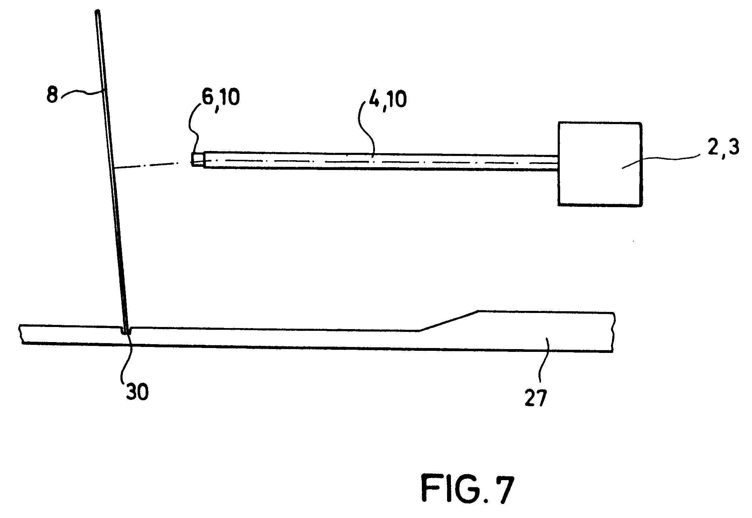

Wie der Fig. 7 zu entnehmen ist, kann das Boot 27 derartig ausgestaltete Ausnehmungen 30 zur Halterung der Siliziumplatten 8 haben, daß diese in einem Winkel gegenüber der Vertikalen gehalten werden. Durch geeignete Drehung der Rohre 4, 10 um ihre Längsachse kann der Strahl derart geführt werden, daß die Strahlebene der zwischen den Prismen 6, 9 und der Siliziumscheibe 8 verlaufenden Strahlen senkrecht auf der geneigt angeordeten Siliziumscheibe 8 liegt.

Durch die Verschiebbarkeit des Meßortes in Längs- und Querrichtung bei der erfindungsgemäßen Ellipsometeranordnung können sämtliche Siliziumscheiben, die innerhalb eines Prozesses gemeinsam behandelt wurden, nacheinander vermessen werden. Hierzu wird die jeweils zuletzt vermessene Scheibe entladen, woraufhin der Meßaufbau zur nächsten Scheibe fährt. Eine Kontamination der Scheiben, wie sie bei Verwenden einer separaten Schichtdickenmeßstation auftreten könnte, wird hierdurch vermieden.

Auf sämtliche Scheiben kann sowohl eine Einzelpunktmessung wie auch eine Linienmessung durchgeführt werden.

Bei dem erfindungsgemäßen Ellipsometer können Prismen aus synthetischem Quarzglas mit 70° Strahlumlenkung verwendet werden, welche einen 55°-Einfallswinkel innerhalb der Prismen haben. Die Phasenverschiebung durch die innere Totalreflektion in derartigen Prismen liegt mit 84° sehr nahe an 90°, so daß die bei Ellipsometern nach dem Stand der Technik erforderliche Verwendung von Viertelwellenplättchen für die Messung dünner Oxidschichten bei dem erfindungsgemäßen Ellipsometer entfällt. Bei Verwenden von Prismen mit 55°-Einfallswinkel ergibt sich eine relative Unempfindlichkeit gegenüber dem tatsächlichen Einfallswinkel, so daß geringe Fehler in der Justierung des Laserstrahls auf die Prismen nur zu unwesentlichen Phasenverschiebungen führen.

Für den Fachmann ist es offensichtlich, daß das erfindungsgemäße Ellipsometer im Gegensatz zu den Ellipsometern nach dem erstbeschriebenen Stand der Technik vom Reinraum aus bedient werden kann. Damit können sämtliche Bedienungen des erfindungsgemäßen Ellipsometers von einer Bedienungsperson im Reinraum durchgeführt werden, ohne daß zur Bedienung der Grauraum betreten werden müßte.

Das erfindungsgemäße Ellipsometer kann derart ausgeführt werden, daß sämtliche Komponenten, die innerhalb des Prozeßrohres liegen, aus Quarzglas bestehen. Damit ist eine Kontamination des Prozeßrohres ausgeschlossen.

## Patentansprüche

1. Ellipsometer zur in-situ-Schichtdickenmessung von Schichten, die innerhalb eines Ofens auf ein Objekt (8) aufgebracht oder abgeschiedenen werden, mit
- einer Analysatoreinheit (3),
- einer Strahlumlenkvorrichtung (6, 9), die ein im Strahlengang vor dem Objekt (8) angeordnetes erstes Prisma (6) und ein im Strahlengang hinter dem Objekt (8) angeordnetes zweites Prisma (9) aufweist,
- einem Paddle (11), an dem das Objekt (8) festgelegt ist, und
- einer Polarisatoreinheit (2),
dadurch gekennzeichnet,
- daß die Prismen (6, 9), die Analysatoreinheit (3) und die Polarisatoreinheit (2) an dem Paddle (11) festgelegt sind,
- daß ein erstes Rohr (4) vorgesehen ist, das sich von dem ersten Prisma (6) in Richtung zu der Polarisatoreinheit (2) erstreckt,
- daß ein zweites Rohr (10) vorgesehen ist, das sich von dem zweiten Prisma (9) in Richtung zu der Analysatoreinheit (3) erstreckt, und
- daß sich die Rohre (4, 10) von der Analysatoreinheit (3) bzw. der Polarisatoreinheit (2) bis zu dem betreffenden Prisma (6, 9) erstrecken und dieses halten.

2. Ellipsometer nach Anspruch 1, dadurch gekennzeichnet,
- daß beide Rohre (4, 10) an dem Paddle (11) befestigt sind, und
- daß jedes der Rohre (4, 10) mit je einem der Prismen (6, 9) verbunden ist, so daß die Prismen (6, 9) mittels der Rohre (4, 10) fest mit dem Paddle (11) verbunden sind.

3. Ellipsometer nach Anspruch 1 oder 2, dadurch gekennzeichnet,
- daß die Rohre (4, 10) aus Quarzglas bestehen und rauhe Innenwände aufweisen.

4. Ellipsometer nach einem der Ansprüche 1 - 3, dadurch gekennzeichnet,
- daß die Prismen (6, 9) an den Stirnflächen der Rohre (4, 10) anliegen.

5. Ellipsometer nach einem der Ansprüche 1 - 4, dadurch gekennzeichnet,
- daß jedes der Rohre (4, 10) sowohl mit einer Gaszufuhrvorrichtung (12, 13) als auch an seinem dem Prisma (6, 9) zugewandten Ende (5) mit einer Gasführungsvorrichtung (14, 15) verbunden ist, und
- daß die Gasführungsvorrichtung (14, 15) derart ausgebildet ist, daß sie einen Gasvorhang vor der dem Objekt (8) zugewandten Prismafläche (16, 17) bildet.

6. Ellipsometer nach Anspruch 5, dadurch gekennzeichnet,
- daß das zu den Rohren (4, 10) zugeführte Gas Stickstoff ist.

7. Ellipsometer nach einem der Ansprüche 1 - 6, dadurch gekennzeichnet,
- daß die Prismen (6, 9) derart angeordnet sind, daß der Strahleinfallswinkel zwischen 50° und 60° beträgt.

8. Ellipsometer nach Anspruch 7, dadurch gekennzeichnet,
- daß der Strahleinfallswinkel 55° beträgt.

9. Ellipsometer nach Anspruch 5, in Rückbeziehung auf Anspruch 4, dadurch gekennzeichnet,
- daß jedes Rohr (4, 10) an seinem dem Prisma (6, 9) zugewandten Ende mit einem Gewinde (21) versehen ist.

10. Ellipsometer nach Anspruch 9, dadurch gekennzeichnet,
- daß das Prisma (6, 9) ein zu dem Gewinde (21) des Rohres (4, 10) passendes Gegengewinde (22) aufweist.

11. Ellipsometer nach Anspruch 9 in Rückbeziehung auf Anspruch 5, dadurch gekennzeichnet,
- daß die Gasführungsvorrichtung (14, 15) das Prisma (6, 9) hält und ein zu dem Gewinde (21) des Rohres (4, 10) passendes Gegengewinde (22) aufweist.

12. Ellipsometer nach einem der Ansprüche 1 - 10, dadurch gekennzeichnet,
- daß sowohl die Analysatoreinheit (3) wie auch die Polarisatoreinheit (2) mittels einer einstellbaren Linearführungsvorrichtung (23, 25, 26) zur linearen Verstellung derselben in Richtung des Strahles mit dem Paddle (11) verbunden sind.

13. Ellipsometer nach einem der Ansprüche 1 - 12, dadurch gekennzeichnet,
- daß die Rohre (4, 10) um ihre Längsachse drehbar angeordnet sind, und
- daß die Objekte (8) mit ihrer die zu messenden Schichten aufweisenden Oberfläche in einem spitzen Winkel zu der Vertikalen gegenüber dem Paddle (11) festgelegt sind.

## Claims

1. An ellipsometer used for in-situ measuring of the film thickness of films, which are applied to or deposited on an object (8) within an oven, comprising
- an analyzer unit (3),
- a beam deflection device (6, 9) comprising a first prism (6) arranged in the ray path in front of the object (8) and a second prism (9) arranged in the ray path behind the object (8),
- a paddle (11) on which said object (8) is secured in position, and
- a polarizer unit (2),
characterized in
- that the prisms (6, 9), the analyzer unit (3) and the polarizer unit (2) are secured in position on the paddle (11),
- that a first tube (4) is provided, which extends from said first prism (6) in the direction of the polarizer unit (2),
- that a second tube (10) is provided, which extends from said second prism (9) in the direction of the analyzer unit (3), and
- that the tubes (4, 10) extend from the analyzer unit (3) and the polarizer unit (2), respectively, up to the respective prism (6, 9) and hold said prism.

2. An ellipsometer according to claim 1, characterized in
- that both tubes (4, 10) are secured to the paddle (11), and
- that each of said tubes (4, 10) is connected to one of said prisms (6, 9) so that the prisms (6, 9) are fixedly connected to the padle (11) by means of said tubes (4, 10).

3. An ellipsometer according to claim 1 or 2, characterized in
- that the tubes (4, 10) consist of fused silica and are provided with rough internal walls.

4. An ellipsometer according to one of the claims 1 to 3, characterized in
- that the prisms (6, 9) abut on the end faces of the tubes (4, 10).

5. An ellipsometer according to one of the claims 1 to 4, characterized in
- that each of the tubes (4, 10) is connected to a gas feeding device (12, 13) and, at its end (5) facing the prism (6, 9), to a gas guiding device (14, 15), and
- that the gas guiding device (14, 15) is constructed such that it will form a gas curtain in front of the prism face (16, 17) facing the object (8).

6. An ellipsometer according to claim 5, characterized in
- that the gas supplied to the tubes (4, 10) is nitrogen.

7. An ellipsometer according to one of the claims 1 to 6, characterized in
- that the prisms (6, 9) are arranged such that the angle of incidence of the beam is between 50½ and 60½.

8. An ellipsometer according to claim 7, characterized in
- that the angle of incidence of the beam is 55½.

9. An ellipsometer according to claim 5, in dependence on claim 4, characterized in
- that each tube (4, 10) is provided with a thread (21) at its end facing the prism (6, 9).

10. An ellipsometer according to claim 9, characterized in
- that the prism (6, 9) is provided with a counterthread (22) adapted to the thread (21) of the tube (4, 10).

11. An ellipsometer according to claim 9, in dependence on claim 5, characterized in
- that the gas guiding device (14, 15) holds the prism (6, 9) and is provided with a counterthread (22) adapted to the thread (21) of the tube (4, 10).

12. An ellipsometer according to one of the claims 1 to 10, characterized in
- that the analyzer unit (3) as well as the polarizer unit (2) are connected to the paddle (11) by means of an adjustable linear guiding device (23, 25, 26) for linearly displacing said analyzer and polarizer units.

13. An ellipsometer according to one of the claims 1 to 12, characterized in
- that the tubes (4, 10) are arranged such that they are adapted to be rotated about their longitudinal axes, and
- that the objects (8) are secured in position relative to the padlle (11) such that their surface provided with the films to be measured extends at an acute angle to the vertical.

## Revendications

1. Ellipsomètre pour la mesure in situ de l'épaisseur de couche de couches qui sont appliquées ou déposées sur un objet (8) à l'intérieur d'un four, avec
- une unité d'analyse (3),
- un dispositif de déviation de rayon (6, 9) qui présente un premier prisme (6) disposé sur la trajectoire du rayon et un second prisme (9) disposé sur la trajectoire du rayon, derrière l'objet (8),
- une palette (11) sur laquelle est fixé l'objet (8), et
- une unité de polarisation (2),
caractérisé en ce
- que les prismes (6, 9), l'unité d'analyse (3) et l'unité de polarisation (2) sont fixés sur la palette (11),
- qu'il est prévu un premier tube (4) qui s'étend, à partir du premier prisme (6), en direction de l'unité de polarisation (2),
- qu'il est prévu un second tube (10) qui s'étend, à partir du second prisme (9), en direction de l'unité d'analyse (3), et
- que les tubes (4, 10) s'étendent de l'unité d'analyse (3) ou de l'unité de polarisation (2) vers le prisme (6, 9) concerné et portent ce dernier.

2. Ellipsomètre suivant la revendication 1, caractérisé en ce
- que les deux tubes (4, 10) sont fixés sur la palette (11) , et
- que chacun des tubes (4, 10) est relié à l'un des prismes (6, 9), de manière que les prismes (6, 9) sont rendus solidaires de la palette (11), par l'intermédiaire des tubes (4, 10).

3. Ellipsomètre suivant la revendication 1 ou 2, caractérisé en ce que les tubes (4, 10) sont en verre de quartz et présentent des parois intérieures rugueuses.

4. Ellipsomètre suivant l'une des revendications 1 à 3, caractérisé en ce que les prismes (6, 9) s'appuient sur les faces frontales des tubes (4, 10).

5. Ellipsomètre suivant l'une des revendications 1 à 4, caractérisé en ce
- que chacun des tubes (4, 10) est raccordé tant à un dispositif d'alimentation de gaz (12, 13) qu'à un dispositif de guidage de gaz (14, 15) à son extrémité (5) orientée vers le prisme (6, 9), et
- que le dispositif de guidage de gaz (14,15) se présente de telle manière qu'il forme un rideau de gaz devant la face de prisme (16, 17) orientée vers l'objet (8).

6. Ellipsomètre suivant la revendication 5, caractérisé en ce que le gaz alimenté vers les tubes (4, 10) et de l'azote.

7. Ellipsomètre suivant l'une des revendications 1 à 6, caractérisé en ce que les prismes (6, 9) sont disposés de telle manière que l'angle d'incidence du rayon est compris entre 50° et 60°.

8. Ellipsomètre suivant la revendication 7, caractérisé en ce que l'angle d'incidence du rayon est de 55°.

9. Ellipsomètre suivant la revendication 5, avec renvoi à la revendication 4, caractérisé en ce que chaque tube (4, 10) est pourvu, à son extrémité orientée vers le prisme (6, 9), d'un filet (21).

10. Ellipsomètre suivant la revendication 9, caractérisé en ce que le prisme (6, 9) présente un contre-filet (22) adapté au filet (21) du tube (4, 10).

11. Ellipsomètre suivant la revendication 9, avec renvoi à la revendication 5, caractérisé en ce que le dispositif de guidage de gaz (14, 15) porte le prisme (6, 9) et présente un contre-filet (22) adapté au filet (21) du tube (4, 10).

12. Ellipsomètre suivant l'une des revendications 1 à 10, caractérisé en ce que tant l'unité d'analyse (3) que l'unité de polarisation (2) sont reliées à la palette (11) à l'aide d'un dispositif de guidage linéaire (23, 25, 26) pour le déplacement linéaire de celles-ci en direction du rayon.

13. Ellipsomètre suivant l'une des revendications 1 à 12, caractérisé en ce
- que les tubes (4, 10) sont disposés de manière rotative autour de leur axe longitudinal, et
- que les objets (8) sont fixés avec leur surface présentant les couches à mesurer suivant un angle aigu par rapport à la verticale à la palette (11).
